Europäisches Patentamt

European Patent Office

Office européen des brevets

(19)

(11) Numéro de publication: **0 190 968 B1**

## FASCICULE DE BREVET EUROPEEN

(12)

(45) Date de publication de fascicule du brevet:
**23.10.91**

(51) Int. Cl.5: **B60B 9/26**, B60B 19/00

(21) Numéro de dépôt: **86400155.7**

(22) Date de dépôt: **27.01.86**

(54) **Roue déformable.**

(30) Priorité: **01.02.85 FR 8501420**

(43) Date de publication de la demande:
**13.08.86 Bulletin 86/33**

(45) Mention de la délivrance du brevet:
**23.10.91 Bulletin 91/43**

(84) Etats contractants désignés:
**AT BE CH DE GB IT LI NL SE**

(56) Documents cités:
**EP-A- 0 023 460**   **DE-A- 2 144 353**
**DE-C- 297 656**    **FR-A- 2 339 505**
**FR-A- 2 502 070**   **US-A- 3 620 278**

(73) Titulaire: **Le Feron de Longcamp, Guy**
**9, Rue Massenet**
**F-75116 Paris(FR)**

(72) Inventeur: **Le Feron de Longcamp, Guy**
**9, Rue Massenet**
**F-75116 Paris(FR)**

Rank Xerox (UK) Business Services

**Description**

La présente invention est relative à une roue déformable du type non pneumatique, c'est à dire conçue pour fonctionner normalement avec une pression gazeuse interne égale à la pression atmosphérique ou seulement très peu supérieure à celle-ci.

Une roue de ce type est décrite dans la demande EP - A - 0 023460 au nom de l'inventeur, et elle comprend un moyeu rigide, une bande de roulement déformable dans le sens radial mais de longueur périphérique sensiblement constante, et des moyens de liaison formés de câbles qui s'enroulent sur une tringle de talon placée au contact du moyeu comme dans un talon de pneumatique classique. Ces câbles, après avoir contourné la tringle du talon, s'écartant radialement du moyeu, vont contourner la partie métallique de la bande de roulement par l'extérieur et vont s'enrouler sur une autre tringle du talon placée contre le bord axialement opposé du moyeu. Les extrémités des câbles remontent le long des parties axiales en direction de la bande de roulement et peuvent même aller se rejoindre sur la face extérieure de cette partie métallique.

Ainsi, la bande de roulement est efficacement reliée au moyeu, et les éléments de liaison exercent sur elle des forces de tension radiales qui s'opposent à une augmentation de la distance entre ladite bande et le moyeu et empêchent que cette distance atteigne une valeur qui compromettrait le fonctionnement de la roue, en particulier par une diminution de la hauteur du moyeu par rapport au sol, et cela même si la bande de roulement oppose par elle-même une résistance faible ou nulle aux déformations radiales.

On a trouvé que ceci exige que l'allongement radial des éléments de liaison, lors de la mise en tension sous charge normale, soit faible, et dans la pratique largement inféau dixième de la longueur radiale de ces éléments au repos, tout en étant suffisant pour permettre, sous charge, la formation d'une empreinte au sol au moins comparable à celle d'une roue pneumatique équivalente, ce qui correspond à un allongement minimum généralement supérieur à 0,1 %.

L'expérience a montré que, dans une roue ainsi conçue, la tension radiale des câbles, sous charge, a une répartition assez particulière : elle est évidemment nulle pour la partie inférieure de la roue, correspondant à l'empreinte au sol, elle présente à la partie supérieure, une valeur qui correspond à la charge appliquée au moyeu ; cette tension se maintient à une valeur sensiblement constante sur à peu près toute la demi-circonférence supérieure et présente un maximum pour les câbles qui relient le moyeu à la partie de la bande de roulement qui est immédiatement au-dessus du sol, ce maximum pouvant atteindre 2 et 3 fois la valeur de la tension au point le plus haut, et même plus, selon la flexibilité propre de la bande de roulement.

Il en résulte que les câbles subissent à chaque tour de roue pendant la marche, une tension radiale maximale suivie d'un temps de tension nulle, puis d'un nouveau maximum. Leur tension est ensuite à peu près constante pendant la moitié de la rotation de la roue.

A l'endroit où les câbles contournent le bord de la bande de roulement, les tensions radiales se traduisent par des efforts de cisaillement des câbles, et par des efforts de flexion radiale du bord de la bande de roulement. Ces efforts alternés sont générateurs de fatigue.

La présente invention a pour but d'augmenter la robustesse et la durée d'une roue du type indiqué ci-dessus, c'est-à-dire d'une roue déformable comportant :

- un moyeu rigide
- une bande de roulement déformable dans le sens radial mais de longueur périphérique sensiblement constante
- des éléments de liaison reliant le moyeu à la bande de roulement, et comprenant au moins une nappe de câbles dont l'allongement radial, lors de sa mise en tension correspondant à la mise de la roue sous sa charge normale est inférieur au dizième de la longueur radiale de la dite nappe au repos et supérieure au millième de la même longueur radiale ; cette nappe s'enroulant autour d'un anneau du talon fixe par rapport au moyeu et,
- des moyens capables de maintenir la pression gazeuse à l'intérieur de la roue à une valeur égale ou seulement très peu supérieure à la pression atmosphérique pendant le fonctionement de la dite roue.

Ce résultat est obtenu par le fait que les éléments de la liaison sont Formés de deux ensembles indépendants situés de part et d'autre d'un plan de symétrie radial de la roue, chaque ensemble étant formé d'un anneau de talon fixe par rapport au moyeu, d'un anneau de bande solidaire de la bande de roulement, et d'au moins un câble qui décrit au moins un tour complet autour des dits anneaux de talon et de bande.

Du fait de cette structure, les câbles n'ont plus à subir un changement brusque de direction en contournant le bord de la bande de roulement, laquelle est nécessairement relativement mince, mais ils s'enroulent alors autour d'un anneau dont la section transversale présente , à l'endroit où le câble la contourne, un rayon de courbure qui peut être considérablement mieux adapté. Cet anneau transmet la tension de chaque câble sur une certaine longueur périphérique du bord de la bande, et répartit ainsi les variations de contraintes.

D'autre part, la construction de la roue est considérablement simplifiée. En effet; celle-ci est constituée de trois éléments qui peuvent être montés séparément et assemblés ensuite : une virole cylindrique constituant la bande de roulement et deux "flancs" distincts, en forme de disque annulaire, constitués chacun de deux anneaux concentriques, autour desquels est enroulée une nappe de fils.

Le moyen préféré pour l'assemblage de ces éléments entre eux consiste à les lier avec une masse de caoutchouc qu'on vulcanise suivant les techniques bien connues de la profession.

La présente invention va maintenant être exposée plus en détail à l'aide d'exemples pratiques, illustrés aux dessins parmi lesquels :

Fig. 1 est une vue schématique en perspective d'une roue selon l'invention, avec découpe partielle

Fig. 2 est une coupe schématique partielle de la même roue

Fig. 3 à 7 sont des coupes fragmentaires illustrant des variantes de la Fig. 2.

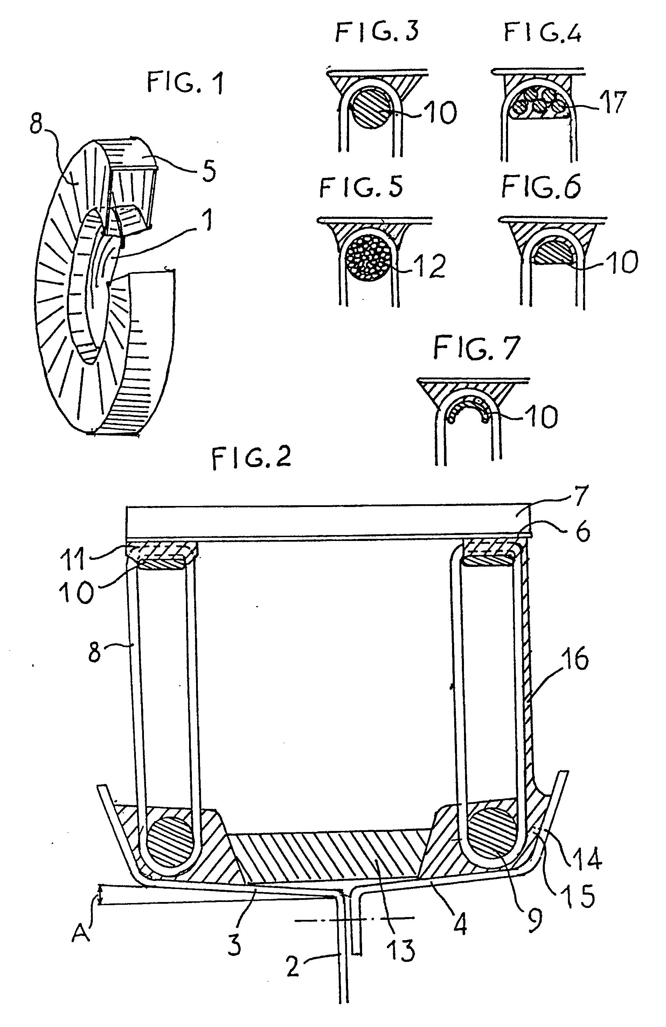

La roue décrite aux fig. 1 et 2 comprend un moyeu 1. constitué d'un voile 2. qui porte une demi-jante, et sur laquelle est fixée de façon amovible, par boulonnage, une autre demijante 4.

La bande de roulement 5. est formée d'une virole d'acier 6. revêtue en sa face externe d'une couche 7 de caoutchouc.

Les moyens de liaison comprennent un câble 8 enroulé en spirales autour du talon 9 et d'un anneau de bande 10 L'anneau de talon est constitué d'une série de câbles d'acier enroulés en torsade, enrobés de caoutchouc et analogues à la "tringle de talon" d'un pneumatique classique. L'anneau de bande 10 est en acier d'une seule pièce, à section aplatie dans le sens radial.

Dans un exemple pratique de réalisation, illustré schématiquement à la fig. 2 , pour une roue de diamètre 500 mm, le câble 8 était un câble de polyamide de diamètre 1 mm , le nombre de tours de câble autour des deux anneaux d'un flanc était de 300. L'anneau de bande avait une section définie par deux segments de droites parallèles reliés par deux demi-cercles. Sa longueur axiale était de 25 mm. et son épaisseur radiale de 2 mm.

L'espace entre la face externe de l'anneau et la face interne de la virole avait une épaisseur de 6 mm. Cet espace était rempli d'une masse de caoutchouc 11. Celle-ci a plusieurs fonctions : d'une part, elle solidarise l'anneau de bande 10 à la bande de roulement elle-même, de façon à transmettre à cette dernières les forces de traction qui se développent dans les câbles 8 lorsque ceux-ci sont en tension. D'autre part, elle immobilise les câbles 8 et les empêche de se déplacer par rapport à l'anneau de bande 10. On notera en effet, que même si les câbles sont en contact les uns des autres lorsqu'ils contournent l'anneau de talon 9 , ils ne sont jamais en contact entre eux lorsqu'ils contournent l'anneau de la bande 10. car celui-ci a une plus grande longueur périphérique. Ils doivent donc être maintenus. D'autre part, la rupture d'un câble dans une spire ne doit pas avoir d'effet sur la tension des autres spires, ce qui implique que les câbles ne puissent pas glisser sur eux-mêmes.

La masse de caoutchouc comprise entre les anneaux et la bande a aussi pour fonction d'autoriser une déformabilité radiale importante de la bande de roulement, par cisaillement et par la déformation de son volume aux extrémités libres ( il est bien connu que la compressibilité du caoutchouc est nulle).

Des caoutchoucs cellulaires, plus déformables grâce à la compressibilité de l'air inclus peuvent également convenir.

La forme de l'anneau de bande n'est pas indifférente : selon l'usage auquel la roue est destinée et aussi en face d'autres considérations, économiques notamment, on pourra préférer une forme ou une autre.

La forme la plus simple, et la moins coûteuse est celle d'un anneau plein à section circulaire (cf. fig. 3.). Cette forme permet d'obtenir des roues dont la bande de roulement peut supporter des gauchissements importants. En revanche sa dimension relativement grande dans le sens radial fait qu'elle est contre-indiquée pour les roues soumises à de grandes déformations dans ce sens (roues à grande empreinte sur le sol) en raison de la fatigue exagérée de l'anneau.

Une forme d'anneau de bande à section pleine mais aplatie dans le sens radial, telle que décrite à la fig. 2. réduit la souplesse au gauchissement par rapport à la forme à section circulaire ci-dessus. En outre, à section égale, elle aboutit à imposer aux fils une courbure à plus petit rayon, ce qui augmente la fatigue. En revanche, la fatigue de l'anneau lors de déformations radiales est réduite.

Ces propriétés désignent donc cette forme pour des roues plus faiblement chargées que pour la forme précédente, mais à plus grande longueur d'empreinte et opérant sur sol relativement régulier.

Les figures 6 et 7 illustrent encore d'autres solutions dans lesquelles l'anneau de bande de forme torique a une section qui montre un grand rayon de courbure dans la partie en contact avec les câbles et une forme non circulaire, plane (fig. 6) ou concave du côté qui est en regard du talon (fig.7) On obtient ainsi des compromis intéressant la rigidité, l'inertie de la roue et la fatigue des câbles.

On peut encore utiliser un anneau de bande formé de plusieurs anneaux indépendants 17 liés entre eux par du caoutchouc (cf. fig.4.) Il est pratiquement sans conséquence mécanique de remplacer plusieurs anneaux indépendants par un nombre égal de spires d'un câble ou tige unique, solution généralement moins coûteuse. Un tel anneau permet de plus fortes déformations à fatigue égale que les anneaux décrits plus haut, en revanche, la présence de caoutchouc augmente l'hystérésis et l'échauffement lors du roulement à grande allure.Ce type d'anneaux convient donc plutôt pour des roues de véhicules tout terrain roulant à vitesse plutôt faible.

Un autre type d'anneau encore est constitué par un ensemble de câbles torsadés 12. analogue aux tringles de talons des pneumatiques classiques (cf. fig. 5.) Ce type permet, à poids et résistance à la fatigue égale, un diamètre plus important et une plus grande flexibilité qu'un anneau plein à section circulaire. Le diamètre plus grand permet de réduire les contraintes de flexion dans les câbles des flancs, ce qui destine cet anneau à des roues supportant des charges importantes. Le risque d'usure par frottement des câbles de la torsade entre eux peut être réduit par intercalation de caoutchouc, mais au prix d'une augmentation de l'hystérésis et de l'échauffement.

La jonction entre la jante et l'anneau de talon pose quelques problèmes spécifiques. Cette partie de la roue est analogue à celle d'un pneumatique classique, du fait que l'anneau de talon présente la même structure torsadée qu'un pneu classique, avec un enrobage de caoutchouc qui sert à immobiliser les câbles et dont la forme extérieure épouse celle de la jante. Toutefois, le faible allongement radial du flanc peut rendre difficile le montage et le démontage de la façon qui est traditionnelle pour les pneumatiques de véhicules de tourisme, et il est généralement préférable de prévoir une jante en deux parties assemblées dans un plan radial.

D'autre part, l'absence de pression interne, ou la faible valeur de celle-ci fait qu'il n'y a pas de force tendant à appuyer le talon contre le bourrelet de la jante dans la partie de la roue qui est en contact avec le sol. On peut remédier à cela, dans les cas où un déjantage est à craindre, à l'aide d'un manchon entretoise disposé entre les deux talons. Toutefois, le plus souvent, le problème se résout je plus simplement en donnant à la face externe de la jante une conicité dirigée vers le plan de symétrie de la roue. En effet, comme on l'a dit plus haut, la tension la plus forte des flancs apparait non pas dans la partie haute de la roue, mais à l'endroit des rayons qui sont au voisinage du point de contact avec le sol. Cette tension tend, du fait de la conicité de la jante, à tirer le talon en direction du bourrelet de la jante, et la rigidité de l'anneau de talon, dans la partie correspondant à la zone de contact avec le sol, suffit à maintenir le talon en place.

Une autre manière de résoudre le problème consite à donner aux flancs une légère conicité, l'écart entre les deux anneaux de bande étant plus grand que l'écart entre les deux anneaux du talon. L'effort de la tension des flancs a le même résultat que ci-dessus. Bien entendu ces différentes mesures peuvent être combinées. En fait, si on ne prévoit pas d'entretoise, le résultat est obtenu si, dans une section axiale, la face externe du moyeu, c'est à dire de chaque demi-jante 3,4 (fig.2) fait en dehors du rebord, avec l'axe de la roue un angle A supérieur à celui que font les moyens de liaison avec le plan de symétrie de la roue.De cette façon, la mise en tension des moyens de liaison, pendant la plus grande partie d'un tour de roue, tend à écarter les moyens de liaison du plan de symétrie et à les plaquer entre les rebords 14 de la jante. Sur la figure 2, les faces extérieures de la jante font un angle de 7° environ avec l'axe de la roue, alors que les câbles 8 sont sensiblement parallèles au plan de symétrie, mais d'autres dispositions sont possibles. La valeur de l'écart des deux angles dépend, entre autres du coefficient de frottement entre la jante et la masse de caoutchouc 15 qui forme le talon.

On peut aussi remarquer que dans les cas où l'on peut se passer totalement de la déformabilité du talon, grâce à la démontabilité de la jante, on peut utiliser pour les talons des anneaux rigides.

On a représenté en 16, sur la fig. 2, du côté droit, un voile de protection flexible, en caoutchouc souple, qui englobe les câbles 8 sur la face extérieure de la roue. Ce voile 16 est d'une souplesse suffisante pour permettre les déformations des câbles 8, et son rôle est seulement de protéger l'intérieur de la roue contre les poussières, graviers ou autres. On prévoit aussi que le voile de protection est indépendant des câbles, ou au contraire qu'il les englobe complètement. Avantageusement, dans le cas d'un voile de protection, un évent est prévu pour éviter une surpression interne.

Il peut être avantageux d'utiliser des câbles préalablement enrobés de caoutchouc pour assurer d'une part, une protection des câbles, d'autre part une meilleure liaison entre les anneaux et les masses 11 et 15 de caoutchouc.

La fabrication d'une roue telle qu'on vient de la décrire comprend normalement les étapes suivantes :

- réalisation des anneaux 9 et 10 et de la virole 6 et préparation d'une couche d'adhérisation sur ces éléments
- confection d'une manière non différenciée des flancs gauche et droit par enroulement en spirale des câbles 8 autour des anneaux 9 et 10
- injection ou transfert de caoutchouc dans les espaces prévus 7, 11 et 15 et vulcanisation.

On peut éventuellement prévoir un premier moulage partiel de caoutchouc pour former les parties 11 et 14 de façon à immobiliser les câbles. Le voile de protection 16 peut être obtenu dans la même opération de moulage ou être fabriqué séparément puis collé sur les éléments 11 et 14.

Le montage de la roue comprend :
- la mise en place du "bandage" formé par la bande de roulement sur laquelle sont fixés les flancs, sur la demi jante 3, portée par le voile 2, éventuellement l'introduction de l'entretoise 13, et la fixation de la demi-jante 4, qui vont immobiliser l'ensemble. Le changement du "bandage" s'il est usé, se fait dans l'ordre inverse du montage.

## Revendications

1. Roue déformable comportant :
   - un moyeu rigide (1)
   - une bande de roulement (5) déformable dans le sens radial mais de longueur périphérique sensiblement constante
   - des éléments de liaison reliant le moyeu à la bande de roulement et comprenant au moins une nappe de câbles (8) dont l'allongement radial, lors de sa mise en tension correspondant à la mise de la roue sous charge normale est inférieur au dizième de la longueur radiale de la nappe au repos et supérieure au millième de la même longueur radiale ; cette nappe s'enroulant autour d'un anneau de talon (9) fixe par rapport au moyeu et
   - des moyens capables de maintenir la pression gazeuse à l'intérieur de la roue à valeur égale ou seulement très peu supérieure à la pression atmosphérique pendant le fonctionnement de la dite roue,
   caractérisée en ce que les éléments de liaison sont formés de deux ensembles indépendants situés de part et d'autre d'un plan de symétrie radial de la roue, chaque ensemble étant formé d'un anneau de talon (9) fixe par rapport au moyeu, d'un anneau de bande (10) solidaire de la bande de roulement, et d'au moins un câble (8) qui décrit au moins un tour complet autour des dits anneaux de talon (9) et de bande (10).

2. Roue déformable selon la revendication 1. caractérisée en ce que le câble (8) décrit une spirale comportant plusieurs tours des dits anneaux (9, 10) et en ce que les dits anneaux (9, 10) sont noyés dans une masse de caoutchouc (11, 15) s'oppose au glissement du câble par rapport à l'anneau correspondant, tant dans le sens de la longueur du câble que dans celui de la longueur de l'anneau.

3. Roue déformable selon l'une des revendications 1 ou 2 caractérisée en ce que l'anneau de bande (10) est un anneau torique plein à section circulaire.

4. Roue déformable selon l'une des revendications 1 ou 2 caractérisée en ce que l'anneau de bande (10) est un anneau torique plein à section allongée dans le sens de l'axe de la roue.

5. Roue déformable selon l'une des revendications 1 ou 2 caractérisée en ce que l'anneau de bande (10) est un anneau torique dont la section est un grand rayon de courbure dans la partie en contact avec les câbles et présente une forme non circulaire dans la partie restante de sa périphérie.

6. Roue déformable selon l'une des revendications 1 ou 2 caractérisée en ce que l'anneau de bande (10) est formé de plusieurs anneaux toriques adjacents, ou de plusieurs spirales adjacentes d'un câble plein.

7. Roue déformable selon l'une des revendications 1 ou 2 caractérisée en ce que l'anneau de bande (10) est formé d'une tresse de plusieurs câbles.

8. Roue selon l'une des revendications 1 à 7 caractérisée en ce que dans une section axiale, la face extérieure du moyeu (1) fait avec l'axe de la roue un angle de valeur supérieure à celui que font les moyens de liaison avec le plan de symétrie de la roue, si bien que la mise en tension des moyens de liaison tend à les écarter de ce plan de symétrie.

9. Roue selon la revendication 8 caractérisée en ce que les moyens de liaison sont parallèles au plan de symétrie de la roue, et la face extérieure du moyeu (1) a une forme biconique, son rayon augmentant quand on s'écarte du plan de symétrie de la roue.

10. Roue selon l'une des revendications 1 à 9 caractérisée en ce qu'elle comprend un manchon entretoise (13) destiné à empêcher le rapprochement des anneaux de talon (9).

11. Roue selon l'une des revendications 1 à 10 caractérisée en ce qu'elle comprend un voile de protection flexible (16) entourant vers l'extérieur les moyens de liaison.

12. Roue selon la revendication 11 caractérisée en ce que le voile de protection (16) englobe au moins une partie des moyens de liaison.

13. Procédé de construction d'une roue selon l'une des revendications 1 à 12 caractérisée en ce qu'on prépare séparément les deux éléments de liaison et la bande (5), en ce qu'on solidarise ensemble la bande et les éléments de liaison, puis on monte l'ensemble de façon amovible, sur une jante formant le moyeu (1).

**Claims**

1. Deformable wheel comprising:
   - a rigid hub (4);
   - a radially deformable tread (5) having a substantially constant peripheral length;
   - means connecting the hub to the tread and comprising at least one layer of cables (8). The radial elongation of this layer, when placed under a tension corresponding to subjecting the wheel to its normal load, is lower than one tenth of the radial length of the layer at rest and higher than one thousandth of the same length, this layer encircling a bead ring (9) which is fixed relative to the hub; and
   - means able to maintain tha gas pressure inside the weel to a value equal to or only very little higher than the athmospheric pressure during the functionning of the said wheel;
   characterized in that the connecting means consist of two independant assemblies, placed on both sides of a radial plan of symmetry of the wheel, each assembly consisting of a bead ring (9) fixed relative to the hub, a tread ring (10) strongly fixed to the tread, and at least one cable (8) which completely encircles the said bead (9) and tread (10) rings in at least one buckle.

2. Deformable wheel according to cleaim 1, characterized in that cable (8) forms a spiral comprising a plurality of buckles around the said rings (9, 10), and in that the said rings (9, 10) are embedded in a mass of rubber (11, 15) which opposes to the sliding of the cable relative to the corresponding ring, as weel in the sense of the length of the cable as in the sense of the length of the ring.

3. Deformable wheel according to one of the claims 1 or 2, characterized in that the tread ring (10) has the form of a torus of circular cross-section.

4. Deformable wheel according to one of the claims 1 or 2, characterized in that the tread ring (10) has the form of a torus the circular cross-section of which is elongated in the sense of the axis of the wheel.

5. Deformable wheel according to one of the claims 1 or 2, characterized in that the tread ring (10) is a torical ring, the cross-section of which shows a large radius of curvature in the part which is in contact with the cables, and a non-circular shape in the remaining parts of its periphery.

6. Deformable wheel according to one of the claims 1 or 2, characterized in that the tread ring (10) consists of several adjacent torical rings, or of several adjacent turns of a solid strand.

7. Deformable wheel according to one of the claims 1 or 2, characterized in that the tread ring (10) consists of a braid of several strands.

8. Deformable wheel according to anyone of the claims 1 to 7, characterized in that, in an axial cross-section, the outer face of the hub (1) makes with the axis of the wheel an angle which is greater than the angle between the connecting means and the plane of symmetry of the wheel, so that the tensioning of the connecting means tends to move them away from this plane of symmetry.

9. Deformable wheel according to claims 8, characterized in that the connecting means are parallel to the plane of symmetry of the wheel, and the outer face of the hub (1) has a biconical shape, which radius is increasing when going away from the plane of symmetry of the wheel.

10. Deformable wheel according to anyone of the claims 1 to 9, characterized in that it comprises a strut-sleeve (13) for preventing the bead rings (9) to move towards each other.

11. Deformable wheel according to anyone of the claims 1 to 10, characterized in that it comprises a flexible protective sheet (16) surrounding outwards the connecting means.

12. Deformable wheel according to claim 11, characterized in that the protection sheet (16) embeds at least a part of the connecting means.

13. Method of manufacturing a wheel according to anyone of the claims 1 to 12, characterized in that both connecting means and the tread (5) are separately prepared, in that the tread and the connecting means are strongly assembled together, and this assembly is removably mounted on a rim forming the hub (1).

## Patentansprüche

1. Verformbares Rad bestehend aus:
   - einer steifen Nabe (1)
   - einer in der radialen Richtung verformbaren, aber mit einer wesentlich beständigen Umfangslänge Laufbahn (5),
   - Verbindungsmitteln, die die Nabe mit der Laufbahn verbinden und die wenigstens aus einer Kabelschicht (8) bestehen, deren radiale Verlängerung, wenn seine Spannung der Spannung des Rads unter normalem Last entspricht, kleiner ist als das Zenhntel der radialen Länge der Schicht in Ruhe und grösser als das Tausendstel derselben radialen Länge; wobei sich diese Schicht um einen auf der Nabe ortsfesten Reifenring (9) dreht und
   - Mitteln, die bei dem Lauf des Rads den Gasdruck innerhalb des Rads mit dem gleichen Wert oder nur sehr wenig grösser als der Luftdruck festhalten können,
   dadurch gekennzeichnet, dass die Verbindungsmittel aus zwei unabhängigen Aggregaten bestehen, und sich beiderseits einer radialen Symmetriefläche des Rads befinden, wobei je des Aggregat aus einem auf der Nabe ortsfesten Reifenring, aus einem mit der Laufbahn verbindenen Laufbahnring (10) und aus wenigstens einem Kabel (8) besteht, das wenigstens einmal um die Reifen - und - Bandringe (10) umgeht.

2. Verformbares Rad nach Anspruch 1, dadurch gekennzeichnet, dass das Kabel (8) eine Spirale mit mehreren Drehungen um die Ringe (9,10) bildet, und dass die Ringe (9,10) in einer Gummimasse (11,15) eingehüllt sind, die das Gleiten des Kabels auf dem entsprechenden Ring verhindert, so gut in der Richtung der Länge des Kabels wie auch in der Richtung der Länge des Rings.

3. Verformbares Rad nach einem der Ansprüche 1 oder 2, dadurch gekennzeichnet, dass der Laufbahnring (10) ein voller, torusförmiger Ring mit kreisförmigem Schnitt ist.

4. Verformbares Rad nach einem der Ansprüche 1 oder 2, dadurch gekennzeichnet, dass der Bandring (10) ein voller, torusförmiger Ring mit in Richtung der Radachse verlängertem Schnitt.

5. Verformbares Rad nach einem der Ansprüche 1 oder 2, dadurch gekennzeichnet, dass der Bandring (10) ein torusförmiger Ring ist, dessen Schnitt einen grossen krümmungradius in dem Teil in Berührung mit den Kabeln hat und eine nicht kreisförmige Form in dem übrigen Teil seines Umfangs hat.

6. Verformbares Rad nach einem der Ansprüche 1 oder 2, dadurch gekennzeichnet, dass der Bandring (10) aus mehreren anliegenden torusförmigen Ringen oder aus mehreren anliegenden Spiralen eines vollen Kabels besteht.

7. Verformbares Rad nach einem der Ansprüche 1 oder 2, dadurch gekennzeichnet, dass der Bandring (10) aus einem Geflecht von mehreren Kabeln besteht.

8. Verformbares Rad nach einem der Ansprüche 1 bis 7, dadurch gekennzeichnet, dass die äussere Fläche der Nabe (1), in einem achsialen Schnitt, mit der Achse des Rads einen Winkel bildet, der grösser ist als derjenige, den die Verbindungsmittel mit der Symmetriefläche des Rads bilden, so dass die Spannung der Verbindungsmittel eine Entfernung dieser Symmetriefläche bewirkt.

9. Rad nach dem Anspruch 8, dadurch gekennzeichnet, dass die Verbindungsmittel zu der Symmetriefläche des Rads parallel sind, und dass die äussere Fläche der Nabe (1) eine bikonische Form hat, indem sein Radius grösser wird, wenn man sich von der Symmetriefläche entfernt.

10. Verformbares Rad nach einem der Ansprüche 1 bis 9, dadurch gekennzeichnet, dass es aus einer Abstandhülle (13) besteht, die das Zusammenrücken der Reifenringe verhindern muss.

11. Rad nach einem der Ansprüche 1 bis 10, dadurch gekennzeichnet, dass es eine flexible Schutzsicht hat, die die Verbindungsmittel nach aussen umgibt.

12. Rad nach dem Anspruch 11, dadurch gekennzeichnet, dass die Schutzschicht (16) wenigstens einen Teil der Verbindungsmittel einschliesst.

**13.** Verfahren für die Herstellung eines Rads nach einem der Ansprüche 1 bis 12, dadurch gekennzeichnet, dass man die beiden Verbindungsmittel und das Band getrennt vorbereitet, dadurch, dass man das Band und die Verbindungsmittel zusammenverbindet, dann wird das Aggregat absetzbar auf eine die Nabe (1) bildende Radflege angebracht.

FIG. 3

FIG.4

FIG. 1

10

17

FIG. 5

FIG.6

12

10

FIG.7

10

FIG.2